# EUROPEAN PATENT APPLICATION

(11) **EP 0 830 000 A2**
(43) Date of publication of application: **18.03.1998**
(21) Application number: 97112099.3
(22) Date of filing: 15.07.1997
(51) Int. Cl.: H04N 1/00

(54) **Apparatus and method for connecting portable phone to portable image capture device**

(30) Priority: 11.09.1996 US 712002
(71) Applicant: Hewlett-Packard Company, Palo Alto, California 94304 (US)
(72) Inventor: Oliver, Thomas C., Fort Collins, CO 80525 (US)
(74) Representative: Schoppe, Fritz, Dipl.-Ing.

(57) **Abstract**

A system that connects a phone (10), such as a public or private phone, a portable phone, a cellular phone, a car phone or a fax machine to a portable image capture device (14) such as a portable scanner or a digital scanner. One embodiment may utilize a memory card (12, 18) to transfer the data signal from a portable image capture device (14) to a phone (10). A second embodiment may utilize a hard-wired interface communication port (20, 11) and a wire, wires or cable (22) to transfer the data signal from a portable image capture device (14) to a phone (10). And a third embodiment may utilize a wireless means of communication (28, 30), such as infra-red or radio transmission to transmit the data signal from a portable image capture device (14) to a phone (10).

## Description

### FIELD OF THE INVENTION

The present invention relates generally to the field of image capture devices and more particularly to a portable scanner. In particular, this invention provides for a means to connect a fax or a portable phone to a digital camera or a portable, handheld scanner.

### BACKGROUND OF THE INVENTION

Students, office workers, telecommuters and others are requiring more and more flexibility in the workplace and in the equipment of the work place. Portable phones, car phones, cellular phones and fax machines have given rise to business being conducted in almost any venue. Handheld scanners are also very useful for capturing information from documents that are located where there is no scanner or copier readily available. It would be advantageous to be able to connect a digital camera or a handheld or other portable scanner to a phone, a portable phone or a fax machine to permit the transmission of information from remote sites through a phone to a computer or other retrieval device at a remote location.

### SUMMARY OF THE INVENTION

The above and other aspects of the present invention are accomplished in a system that connects a phone or fax machine to an image capture device such as a portable scanner or a digital camera. One embodiment may utilize a memory card such as a PCMCIA card, a mini memory card, or other type of memory card to transfer data from a portable image capture device to a phone or fax machine. A second embodiment may utilize a wired interface communication port such as a high speed serial communication port, a universal serial bus port or other known hard wired communication port and a cable or wire to transfer data from a portable image capture device to a phone or fax machine. And a third embodiment may utilize infra-red or other wireless communication means such as a radio signal to transmit the data from a portable image capture device to a phone or fax machine.

The present invention may further include an apparatus for connecting an image capture device to a phone or fax machine, said apparatus comprising: an image capture device; a transmitting port on said image capture device for transmitting a data signal representative of data captured by said image capture device; a phone; a receiving port on said phone for receiving a signal representative of said data signal transmitted by said image capture device; and a means for connecting said transmitting port on said image capture device to said receiving port on said phone, wherein the image capture device may include a portable image capture device such as a portable, handheld scanner and the phone may include a portable phone such as a cellular phone.

The present invention may also include a method of transmitting information captured by an image capture device, said method comprising the following steps: a) capturing data with an image capture device; b) transmitting said data captured by said image capture device to a phone or fax machine; c) receiving said data captured by said image capture device with said phone or fax machine; and d) transmitting said data captured by said image capture device with said phone or fax machine, wherein the image capture device may be a portable image capture device such as a portable handheld scanner and the phone may be a portable phone such as a cellular phone.

### BRIEF DESCRIPTION OF THE DRAWINGS

The above and other objects, features and advantages of the present invention will be better understood by reading the following more particular description of the invention, presented in conjunction with the following drawings, wherein:
Figure 1 shows a schematic diagram of an image capture device and a phone or fax machine according to a first embodiment of the present invention;
Figure 2 shows a schematic diagram of an image capture device and a phone or fax machine according to a second embodiment of the present invention; and
Figure 3 shows a schematic diagram of an image capture device and a phone or fax machine according to a third embodiment of the present invention.

### DETAILED DESCRIPTION OF THE PREFERRED EMBODIMENT

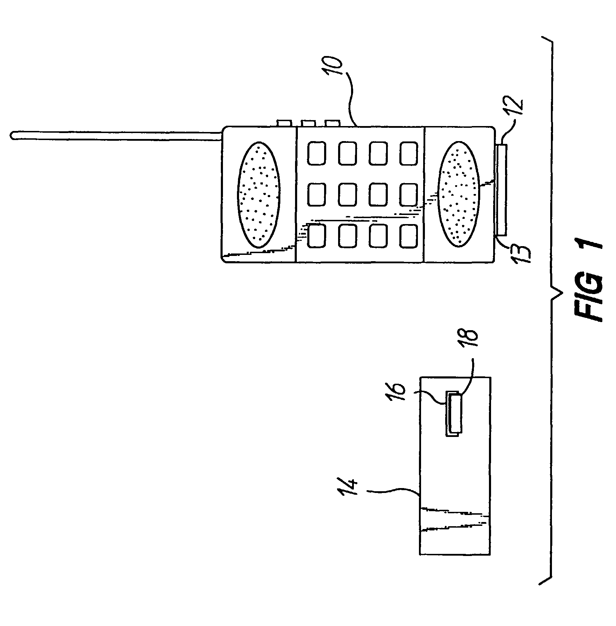

Referring to Figure 1, a portable image capture device 14, such as a portable, handheld scanner or a digital camera and a portable phone or fax machine 10 are shown. It should be noted that through out this specification scanner is used for brevity, however, scanner may be any known image capture device, including a portable, handheld scanner or a digital camera. The portable image capture device 14 has a memory card socket 16 such as a PCMCIA card socket, a mini memory card socket or other memory card socket for receiving a memory card 18 such as a PCMCIA card, a mini memory card or other type of memory card. PCMCIA stands for "Personal Computer Memory Card International Association" which is a standard maintained by the PCMCIA specifications committee. Phone 10 is also equipped with a memory card socket 13 for receiving a memory card 12. It should be noted through out this document, although element 10 will be referred to as a phone or portable phone, it could also be a public or private phone, a portable phone, a cellular phone, a car phone, or a fax machine.

The operation of the first embodiment of the present invention would entail scanning an image with the portable image capture device 14 while a memory card 18 is inserted in the memory card socket 16. The memory card 18 stores the data that represents the scanned image. Memory card 18 can then be removed from the memory card socket 16 of the image capture device 14 and inserted into the memory card socket 13 of the portable phone 10. The portable phone 10 can then be used to transmit the data on the memory card 18 that was capture by the image capture device 14.

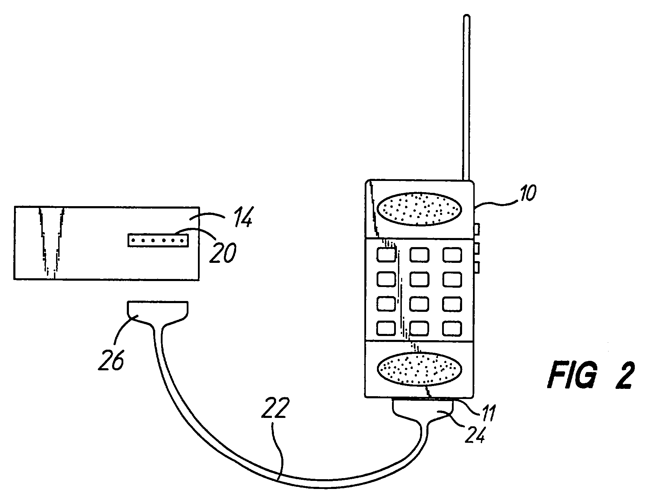

Referring to Figure 2, a portable image capture device 14, such as a portable, handheld scanner and a portable phone 10 are shown. The portable image capture device 14 has a wired interface connector port 20 such as a high speed serial communication port, a universal serial bus, or any other known or developed wired interface port for receiving a connector 26 of a wire or cable 22. Some known types of communication cables include RS-232, RS-432, P-1394, and USB. Portable phone 10 also has a wired interface connector port 11 for receiving a connector 24 of a wire or cable 22.

The operations of the second embodiment of the present invention would entail scanning an image with the portable image capture device 14. If the portable image capture device is equipped with enough memory, then the connection between the portable image capture device 14 and the portable phone 10 does not have to be real time, but rather the image could be stored in the image capture device and then transmitted to a computer or other device via the portable phone 10 through serial cable 22 at a later time. However, if the portable image capture device 14 does not have the capability to store the data being scanned, then the portable image capture device 14 would have to be connected to the portable phone 10 by means of the cable 22 real time and the phone would have to be in operation and transmitting the data as the image capture device 14 is scanning the image. Alternatively, the phone may be equipped with a memory buffer, so that the image capture device could transmit to the phone real time and the phone could store the data signal in its memory buffer and retransmit it in its own transmission time, which is generally slower than an image capture device can scan an image, thus, there will probably some lag time at the phone transmission end of the system.

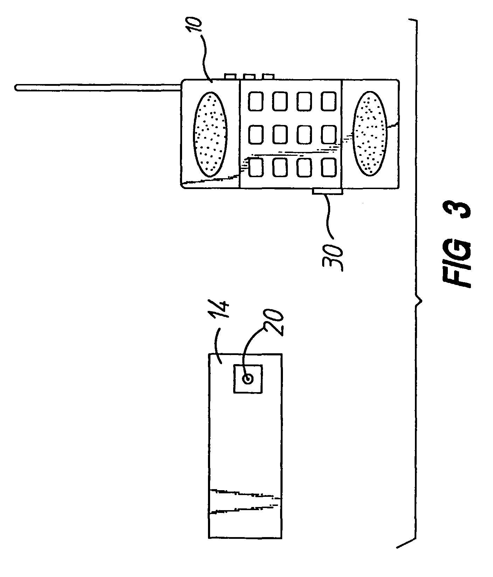

Referring to Figure 3, a portable image capture device 14, such as a portable, handheld scanner and a portable phone 10 are shown. The portable image capture device 14 has wireless communication means such as an infra-red transmission means 28 for transmitting an infra-red data signal that represents the data captured during the image capture process. Portable phone 10 has an infra-red receiving means 30 for receiving an infra-red data signal. Infra-red signal transmissions are governed by FIR and SIR infra-red standards committees. It should be noted that although an infra-red transmission and receiving means are discussed, any known wireless communication means such as radio transmission means could be used.

The operation of the third embodiment of the present invention would entail scanning an image with the portable image capture device 14. If the portable image capture device is equipped with enough memory, then the transmission between the portable image capture device 14 and the portable phone 10 does not have to be real time, but rather the image being scanned could be stored in the image capture device and then transmitted to a computer or other device through the portable phone 10 infra-red transmission between the infra-red transmission port 28 and the infra-red receiving port 30 at a later time. However, it should be noted that at the present time, for infra-red transmissions, the transmitting port and the receiving port need to be in line with each other. In the future this requirement may change, if infra-red transmissions are developed to be similar to radio transmissions which are broadcast in all directions, rather than in a relatively straight line like infra-red transmission are sent.

However, if the portable image capture device 14 does not have the capability to store the data being scanned, then the portable image capture device 14 would have to be transmitting to the portable phone 10 by means of infra-red transmitting port 28 real time and the phone would have to be in operation, receiving the data by means of the infra-red receiving port 30, and transmitting the data as the image capture device 14 is scanning the image. The image capture device could be equipped with the means to delay the transmission of the data signal to match the rate of the phone or fax transmission.

The foregoing description of the present invention has been presented for purposes of illustration and description. It is not intended to be exhaustive or to limit the invention to the precise form disclosed, and other modifications and variations may be possible in light of the above teachings. For example, the image capture device does not need to be portable, but rather could be an image capture device available at a public place, such as a public library or in the home office. Moreover, the phone does not need to be a portable phone, but rather could be a phone available at a public place, such as a pay phone or a home phone.

Another optional embodiment is to use the expansion memory port and an expansion or memory card on the image capture device to do the interfacing, while the memory card itself could be equipped with the infra-red interface or the hard-wired connection to a phone by means of an expansion or memory card that has a similar infra-red interface or hard-wired connection. This option would simplify the type of ports put on image capture devices and phones to just one type of port, an expansion or memory card port. Then the expansion or memory cards themselves would have the three different options - straight memory card connection, infra-red connection, or hard-wired connection. Although the invention is believed to be of the greatest advantage for use with portable, handheld image capture devices such as portable, handheld scanners and digital cameras and portable type phones, stationary and permanent image capture devices and phones or fax machines are still considered to be within the scope of the invention.

The gist of the invention is the capability of transmitting information from an image capture device over the telephone to a remote site. Accordingly, public or private phones and/or public or private image capture devices could be equipped with one or all of the above identified means of transmitting data. However, the most feasible would probably be to equip public phones and the image capture devices in places such as libraries and other places where the gathering of information occurs with memory cards.

The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. An apparatus for connecting an image capture device (14) to a phone (10), said apparatus comprising:
an image capture device (14);
a transmitting port on said image capture device (14) for transmitting a data signal representative of data captured by said image capture device (14);
a phone (10);
a receiving port on said phone (10) for receiving a signal representative of said data signal transmitted by said image capture device (14); and
a means for connecting said transmitting port (16, 20 or 28) on said image capture device (14) to said receiving port on said phone (10).

2. The apparatus according to claim 1 wherein said transmitting port (16, 20 or 28) on said image capture device (14) is a memory card socket (16), said receiving port on said phone (10) is a memory card socket (13) and said means for connecting said transmitting port on said image capture device (14) to said receiving port on said phone (10) is a memory card (12, 18).

3. The apparatus according to claim 2 wherein said transmitting port on said image capture device (14) is a PCMCIA memory card socket (16), said receiving port on said phone (10) is a PCMCIA memory card socket (13) and said means for connecting said transmitting port on said image capture device to said receiving port on said phone is a PCMCIA memory card (12, 18).

4. The apparatus according to claim 2 wherein said transmitting port on said image capture device (14) is a mini memory card socket (16), said receiving port on said phone (10) is a mini memory card socket (13) and said means for connecting said transmitting port on said image capture device (14) to said receiving port on said phone (10) is a mini memory card (12, 18).

5. The apparatus according to claim 1 wherein said transmitting port on said image capture device (14) is a wire interface connector port (20), said receiving port on said phone (10) is a wire interface connector port (11), and said means for connecting said transmitting port on said image capture device (14) to said receiving port on said phone (10) is a wire or cable (22).

6. The apparatus according to claim 5 wherein said transmitting port on said image capture device (14) is a high speed serial communication port (20), said receiving port on said phone (10) is a high speed serial communication port (11), and said means for connecting said transmitting port on said image capture device (14) to said receiving port on said phone (10) is a high speed serial communication cable (22).

7. The apparatus according to claim 1 wherein said transmitting port on said image capture device (14) is a wireless transmission port (28), said receiving port on said phone (10) is a wireless receiving port (30), and said means for connecting said transmitting port on said image capture device (14) to said receiving port on said phone (10) is a wireless means of data transmission.

8. The apparatus according to claim 7 wherein said transmitting port on said image capture device (14) is an infra-red transmission port (28), said receiving port on said phone (10) is an infra-red receiving port (30), and said means for connecting said transmitting port on said image capture device (14) to said receiving port on said phone (10) is an infra-red signal.

9. The apparatus according to claim 1 wherein said image capture device (14) is a portable image capture device.

10. The apparatus according to claim 9 wherein said portable image capture device (14) is a handheld scanner.
